(19) Europäisches Patentamt
European Patent Office
Office européen des brevets

(11) EP 3 986 880 B1

(12) EUROPEAN PATENT SPECIFICATION

(45) Date of publication and mention of the grant of the patent:
**29.01.2025 Bulletin 2025/05**

(21) Application number: **19736413.6**

(22) Date of filing: **20.06.2019**

(51) International Patent Classification (IPC):
***C07D 307/00*** (2006.01) ***C08G 63/185*** (2006.01)

(52) Cooperative Patent Classification (CPC):
**C08G 63/185**

(86) International application number:
**PCT/FI2019/050487**

(87) International publication number:
**WO 2020/254715 (24.12.2020 Gazette 2020/52)**

# (54) BIFURAN COPOLYESTERS AND A METHOD FOR PREPARATION THEREOF

BIFURAN-COPOLYESTER UND VERFAHREN ZU IHRER HERSTELLUNG

COPOLYESTERS DE BIFURANE ET LEUR PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.04.2022 Bulletin 2022/17**

(73) Proprietor: **Oulun Yliopisto**
**90014 Oulun Yliopisto (FI)**

(72) Inventors:
- **HEISKANEN, Juha**
  **90014 Oulun yliopisto (FI)**
- **KAINULAINEN, Tuomo**
  **90014 Oulun yliopisto (FI)**

(74) Representative: **Laine IP Oy**
**Porkkalankatu 24**
**00180 Helsinki (FI)**

(56) References cited:
**WO-A1-2019/182693**

- **TUOMO P. KAINULAINEN ET AL: "UV-Blocking Synthetic Biopolymer from Biomass-Based Bifuran Diester and Ethylene Glycol", MACROMOLECULES, vol. 51, no. 5, 13 March 2018 (2018-03-13), WASHINGTON, DC, UNITED STATES, pages 1822 - 1829, XP055577091, ISSN: 0024-9297, DOI: 10.1021/acs.macromol.7b02457**
- **NAOKI MIYAGAWA ET AL: "Preparation of Furan Dimer-based Biopolyester Showing High Melting Points", CHEMISTRY LETTERS, vol. 46, no. 10, 5 October 2017 (2017-10-05), JAPAN, pages 1535 - 1538, XP055577076, ISSN: 0366-7022, DOI: 10.1246/cl.170647**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

FIELD OF THE INVENTION

The present invention relates generally to polymer chemistry and particularly to the synthesis of a novel bifuran copolyester. In certain aspects, the invention also relates to food and beverage packaging materials.

BACKGROUND OF THE INVENTION

Recently, there has been an increased focus on obtaining polymeric materials derived from renewable resources. This growing trend is aiming at finding replacements to fossil-based resources and materials such as poly(ethylene terephthalate), PET, a high performance plastic that is especially prevalent in packaging due to its gas barrier properties, transparency, and mechanical strength.

Biomass offers a promising renewable alternative to fossil resources, as production of chemicals and materials can be achieved in a carbon-neutral way. In particular, furans are bio-based platform-chemicals, which are easily prepared from plant-based biomasses. Moreover, furans have long been studied as potential precursors for various types of polymers such as thermosets and thermoplastics. More recently, polyesters have become a particularly prominent area of research.

As simple dehydration products of monosaccharides, furans are key bio-based aromatic chemicals with various uses. Moreover, furan-based polyesters, in particular poly(ethylene furanoate) (PEF), possess advantageous material properties. PEF is known to have low oxygen and carbon dioxide permeability, even when compared to PET, a well-known packaging polyester. Reduced permeability to various gases can lead to higher performance packaging.

2,2'-Bifuran-5,5'-dicarboxylic acid (BFDCA) has recently been described as another furan-based precursor for novel bio-based polyesters (Kainulainen et al., 2018, Miyagawa et al, 2018). As a furan "dimer", BFDCA consists fully of bio-based carbon. It has been shown that BFDCA-based homopolyesters, e.g. poly(ethylene bifuranoate) (PEBf), have relatively high glass-transition temperatures, and that the highly conjugated molecular structure of the bifuran monomer provides inherent ultraviolet (UV) light absorption. In addition, it was shown that PEBf possesses lower $O_2$ and water vapor permeability than PET.

Miyagawa et al. (Chemistry Letters, vol. 46, no. 10, 5 October 2017, pages 1535-1538) discloses the synthesis of bifuran polyesters using a bifuran carboxylic monomer.

WO2019182693 discloses a process comprising polymerizing a 5,5'-di(protected)-2,2'-bifuran in one or more steps to form a polyester comprising (2,2'-bifuran)-5,5'-dicarboxylate structural units.

In the present invention, the synthesis of new random copolyesters comprising BFDCA structures is presented. Thermal and mechanical properties of the copolyesters are then compared to the pure homopolyesters.

SUMMARY OF THE INVENTION

The present invention is based on a discovery that, surprisingly, the UV light absorption property provided by BFDCA structures for the homopolyester retains in a mixed copolyester even in the case when the copolymer comprises a relatively low number of BFDCA structures. UV-protecting plastics or coatings are useful in food packages and, e.g., in photovoltaic cells, as organic solar cells can retain more of their efficiency over time when properly protected from UV radiation. Further, the novel copolyesters are also promising oxygen and water barrier materials.

The present invention is characterized by what is stated in the appended claims.

Accordingly, the present invention provides a copolyester comprising repeating units of (i) a 2,2'-bifuran-5,5'-dicarboxylic monomer residue, (ii) a diol monomer residue, and (iii) an aliphatic or cycloaliphatic $C_3$-$C_8$ dicarboxylic monomer residue or an aromatic $C_6$-$C_8$ dicarboxylic monomer residue, wherein said 2,2'-bifuran-5,5'-dicarboxylic monomer residue is derived from the compound of Formula

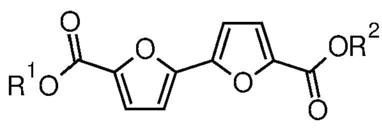

(I),

wherein $R^1$ and $R^2$ are each independently selected from the group consisting of: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, and

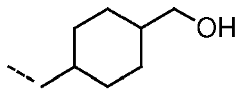
,

wherein said aliphatic or cycloaliphatic $C_3$-$C_8$ dicarboxylic monomer residue or said aromatic $C_6$-$C_8$ dicarboxylic monomer residue is derived from the compound of Formula

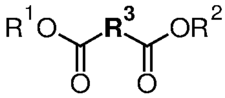
(II),

wherein $R^1$ and $R^2$ are independently as defined above for Formula (I) and $R^3$ is selected from the group consisting of

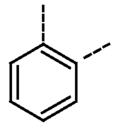

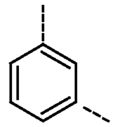

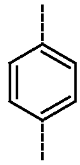

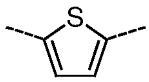

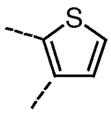

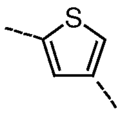

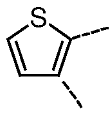
.

In another aspect, the present invention provides a method of preparing a bifuran copolyester, the method comprising the steps of:

a) combining at least (i) a bifuran of Formula

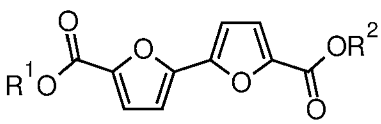
(I),

wherein $R^1$ and $R^2$ are each independently selected from the group consisting of: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, and

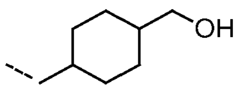
;

(ii) a diester of an aliphatic or cycloaliphatic $C_3$-$C_8$ dicarboxylic monomer residue or of an aromatic $C_6$-$C_8$ dicarboxylic monomer residue, preferably a diester compound of Formula

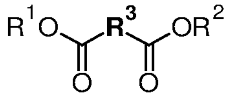
(II),

wherein $R^1$ and $R^2$ are each as defined above for Formula (I) and $R^3$ is selected from the group consisting of $-CH_2-$, $-(CH_2)_2-$, $-(CH_2)_3-$, $-(CH_2)_4-$, $-(CH_2)_5-$, $-(CH_2)_6-$, and the following cyclic ring structures

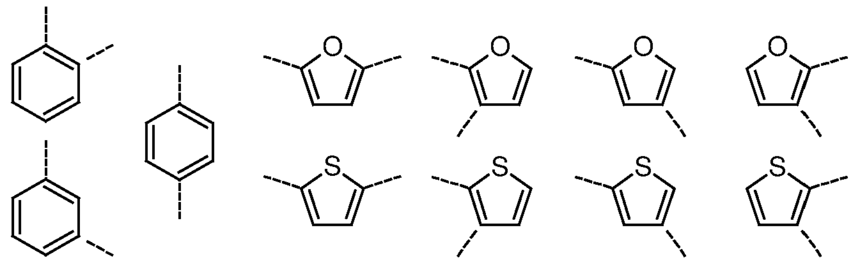

;

(iii) an aliphatic, cycloaliphatic or aromatic $C_1$-$C_8$ diol and (iv) a metal catalyst to form a reaction mixture;

b) subjecting the mixture combined in step a) to a temperature in the range of from about 140°C to about 220°C under an inert atmosphere;

c) performing polycondensation to the mixture obtained in step b) by heating under reduced pressure to a temperature in the range of from about 210°C to about 260°C.

In a further aspect, the present invention is directed to a use of a 2,2'-bifuran-5,5'-dicarboxylic monomer in preparing copolyesters having ultraviolet light (UV) blocking properties.

BRIEF DESCRIPTION OF THE DRAWINGS

**Figure 1.** a) $^{1}H$ NMR signal assignments of the polyesters in TFA-d (ppm=mg/kg). b) $^{13}C$ NMR assignment of the sequence sensitive butylene group carbon in TFA-d (Fu=furan, Bf=bifuran) (ppm=mg/kg).

**Figure 2**. Heating and cooling at 10 °C/min rate shows that both poly(butylene furanoate) (PBF) and poly(ethylene bifuranoate) (PBBf) are typical semi-crystalline materials with pronounced cold-crystallization and melting peaks. See a) 1$^{st}$ heating at 10 °C/min. b) 1$^{st}$ cooling at -10 °C/min. c) 2$^{nd}$ heating at 10 °C/min. d) 1$^{st}$ cooling at -5 °C/min (copolyesters). e) 2$^{nd}$ heating at 5 °C/min (copolyesters).

**Figure 3.** Thermogravimetric decomposition curves for PBF, PBBf, and their random copolyesters in $N_2$ (heating rate 10 °C/min).

**Figure 4.** Transmittance of melt-pressed PBF, PBBf, $PBF_{90}Bf_{10}$, and $PBF_{25}Bf_{75}$ films.

DETAILED DESCRIPTION OF EMBODIMENTS

The term "polyester" as used herein is inclusive of polymers prepared from multiple monomers that are referred to herein as copolyesters. Terms such as "polymer" and "polyester" are used herein in a broad sense to refer to materials characterized by repeating moieties or units. The polyesters as described herein may have desirable physical and thermal properties and can be used to partially or wholly replace polyesters derived from fossil resources, such as poly(ethylene terephthalate), PET.

In the context of the present specification, ester monomers preferably comprise the general formula R'OOCRCOOR", where R may be an alkyl group, or an aryl group, and R' and R" may be an alkyl group or an aryl group. Dashed lines in the structure formulas presented herein represent the linkage between a C atom and an O atom or between a C atom and another C atom (such as linkages selected from the group consisting of C-R, R-C, R'-O and O-R" in the formula R'OOCRCOOR'').

In various aspects described herein, polyesters can be prepared from biomass by utilizing monomers which are obtained from biomass. Furfural and hydroxymethylfurfural (HMF) may be obtained from pentoses and hexoses, respectively. HMF can also be oxidized or reduced to obtain 2,5-furandicarboxylic acid (FDCA). The preparation of dimethyl 2,5-furandicarboxylate and dimethyl 2,2'-bifuran-5,5'-dicarboxylate are described in the Experimental Section below.

In general, polyesters are prepared by reacting a dicarboxylic monomer containing furan and/or other aromatic functionality, and at least one diol. Suitable diols include aliphatic or cycloaliphatic C3-C10 diols, non-limiting examples of which include 1,3-propanediol, 1,4-butanediol, and 1,2-ethanediol.

Unless otherwise clear from context, percentages referred to herein are expressed as percent by weight based on the total composition weight.

The present invention is directed to a copolyester comprising repeating units of (i) a 2,2'-bifuran-5,5'-dicarboxylic monomer residue, (ii) a diol monomer residue, and (iii) an aliphatic or cycloaliphatic $C_3$-$C_8$ dicarboxylic monomer residue or an aromatic $C_6$-$C_8$ dicarboxylic monomer residue, wherein said 2,2'-bifuran-5,5'-dicarboxylic monomer residue is derived from the compound of Formula

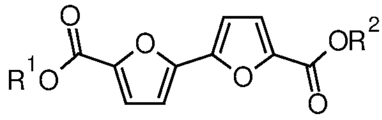 (I),

wherein $R^1$ and $R^2$ are each independently selected from the group consisting of: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, and

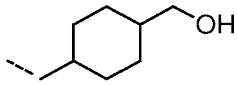 ,

wherein said aliphatic or cycloaliphatic $C_3$-$C_8$ dicarboxylic monomer residue or said aromatic $C_6$-$C_8$ dicarboxylic monomer residue is derived from the compound of Formula

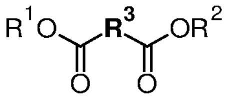 (II),

wherein $R^1$ and $R^2$ are independently as defined above for Formula (I) and $R^3$ is selected from the group consisting of

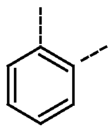
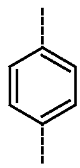
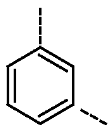

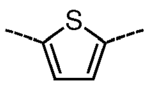 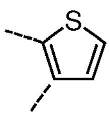 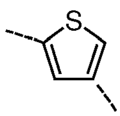 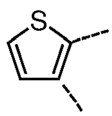 .

Preferably, the molar ratio of (i) the 2,2'-bifuran-5,5'-dicarboxylic residues and (iii) the aliphatic or cycloaliphatic $C_3$-$C_8$ dicarboxylic residues or the aromatic $C_6$-$C_8$ dicarboxylic residues is between 2000:1 and 1:2000 in said copolyester. More preferably, said ratio is 90:10, 75:25, 50:50, 25:75, 10:90, 5:95, 1:100, 1:200, 1:500, 1:1000, 1:2000 or any range between the listed ratios. Most preferably, said range is between 50:50 and 1:2000, between 50:50 and 1:200, between 10:90 and 1:100, 1:200 or 1:2000.

The dicarboxylic monomer residues of the copolyester are preferably derived or obtained from the diesters of said monomers. An example of an diester of the aromatic $C_6$ dicarboxylic monomer residue is dimethyl 2,5-furandicarboxylate, FDCA (see Experimental Section below). An example of an diester of the aromatic $C_8$ dicarboxylic monomer residue is dimethyl terephthalate (DMT):

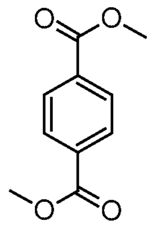

.

In another preferred embodiment, the present invention is directed to a bifuran copolyester comprising the structure of Formula

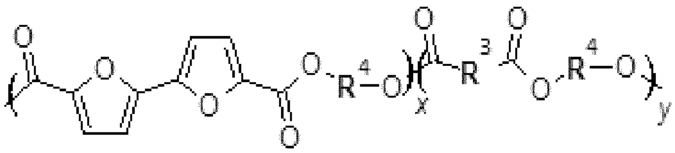

(III),

wherein $R^3$ is selected from the group consisting of

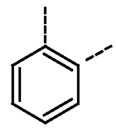

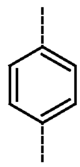

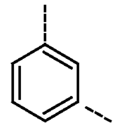

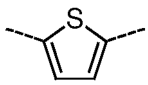

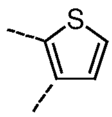

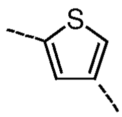

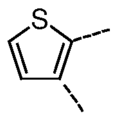

,

wherein each $R^4$ is independently selected from the group consisting of $-CH_2-$, $-(CH_2)_2-$, $-(CH_2)_3-$, $-(CH_2)_4-$, $-(CH_2)_5-$, $-(CH_2)_6-$, $-(CH_2)_7-$, $-(CH_2)_8-$, and

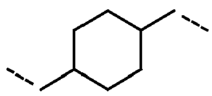

,

wherein the two structures in parenthesis represent randomly repeating units or residues of the copolyester, and wherein x is independently an integer of 1 or more, preferably 1-30, and y is independently an integer of 1 or more, preferably 1-30. Preferably, the ratio of x:y is between 2000:1 and 1:2000. More preferably, said ratio is 90:10, 75:25, 50:50, 25:75, 10:90, 5:95, 1:100, 1:200, 1:500, 1:1000, 1:2000 or any range between the listed ratios. Most preferably, said range is between 50:50 and 1:2000, between 50:50 and 1:200, between 10:90 and 1:100, 1:200 or 1:2000.

In another preferred embodiment, $R^3$ is selected from the group consisting of:

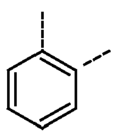

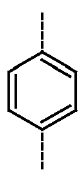

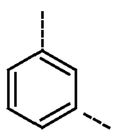

.

In a more preferred embodiment, $R^3$ is

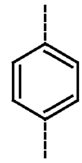.

In another preferred embodiment, $R^3$ is selected from the group consisting of:

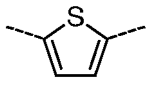 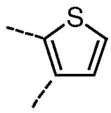 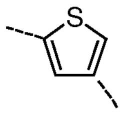 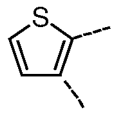.

In another preferred embodiment, each $R^4$ is $-(CH_2)_4-$.

Having similar or better properties compared to PET (see Experimental Section below), a person skilled in the art would understand that the above described copolyester can be applied to beverage bottles, food package films, shopping bags and other food package containers.

The present invention is further directed to a method of preparing a bifuran copolyester, the method comprising the steps of:

a) combining at least (i) a bifuran of Formula

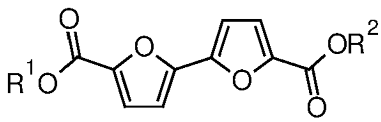 (I),

wherein $R^1$ and $R^2$ are each independently selected from the group consisting of: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, and

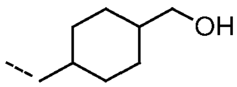;

(ii) a diester of an aliphatic or cycloaliphatic $C_3$-$C_8$ dicarboxylic monomer residue or of an aromatic $C_6$-$C_8$ dicarboxylic monomer residue, preferably a diester compound of Formula

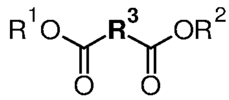 (II),

wherein $R^1$ and $R^2$ are each as defined above for Formula (I) and $R^3$ is selected from the group consisting of $-CH_2-$, $-(CH_2)_2-$, $-(CH_2)_3-$, $-(CH_2)_4-$, $-(CH_2)_5-$, $-(CH_2)_6-$, and the following cyclic ring structures

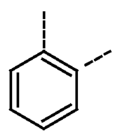 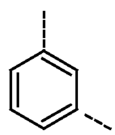 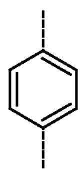 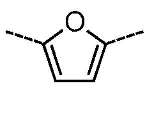 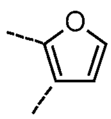 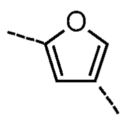 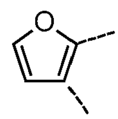 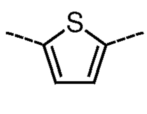 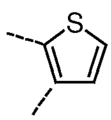 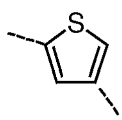 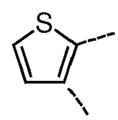;

(iii) an aliphatic, cycloaliphatic or aromatic $C_1$-$C_8$ diol and (iv) a metal catalyst to form a reaction mixture;

b) subjecting the mixture combined in step a) to a temperature in the range of from about 140°C to about 220°C under an inert atmosphere;

c) performing polycondensation to the mixture obtained in step b) by heating under reduced pressure to a temperature in the range of from about 210°C to about 260°C.

A typically useful procedure is thus a conventional two-step melt-polymerization method, such as generally also used in the production of PET. Thereby a mixture of the diol and dicarboxylic monomers are subjected to heating, in two stages. Thus, e.g., the mixture is first exposed to a temperature in the range of 140°C - 220°C, and thereafter to a temperature of 210°C - 260°C. Vacuum may be applied gradually, to obtain high molecular weight polyesters. Typically, the pressure applied during step c) is subatmospheric, for example 0.1 to 900 mBar (10 to 90000 Pa), for example about 1 to 100 mBar (100 to 10000 Pa).

In a preferred embodiment, said metal catalyst in step a) comprises at least one titanium, bismuth, zirconium, tin, antimony, germanium, aluminium, cobalt, magnesium, or manganese compound. More preferably said metal catalyst is tetrabutyl titanate (titanium (IV) butoxide).

Accordingly, in embodiments of the invention, at least one metal catalyst is present in steps a) and b). The amount of metal in the metal catalyst is in the range of from 20 parts per million (ppm, i.e. mg/kg) to 400 ppm by weight, based on a theoretical yield of 100% of the polymer produced. In one embodiment, the metal catalyst is present in the mixture in a concentration in the range of from about 20 ppm (mg/kg) to about 300 ppm, based on the total weight of the polymer. Suitable metal catalysts can include, for example, titanium compounds, bismuth compounds such as bismuth oxide, germanium compounds such as germanium dioxide, zirconium compounds such as tetraalkyl zirconates, tin compounds such as butyl stannoic acid, tin oxides and alkyl tins, antimony compounds such as antimony trioxide and antimony triacetate, aluminum compounds such as aluminum carboxylates and alkoxides, inorganic acid salts of aluminum, cobalt compounds such as cobalt acetate, manganese compounds such as manganese acetate, or a combination thereof. Alternatively, the catalyst can be a tetraalkyl titanate $Ti(OR)_4$, for example tetraisopropyl titanate, tetrabutyl titanate (tetra-n-butyl titanate), tetrakis(2-ethylhexyl) titanate, titanium chelates such as, acetylacetonate titanate, ethyl acetoacetate titanate, triethanolamine titanate, lactic acid titanate, or a combination thereof. In one embodiment, the metal catalyst comprises at least one titanium, bismuth, zirconium, tin, antimony, germanium, aluminum, cobalt, magnesium, or manganese compound. In one embodiment, the metal catalyst comprises at least one titanium compound. Suitable metal catalysts can be obtained commercially or prepared by known methods.

In preferred embodiments, said bifuran of Formula (I) in step a) is dimethyl 2,2'-bifuran-5,5'-dicarboxylate having the structure

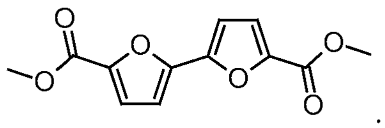

In other preferred embodiments, said diester compound in step a) is dimethyl 2,5-furandicarboxylate having the structure

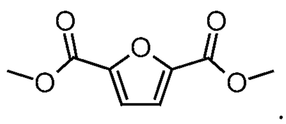

In other preferred embodiments, said aliphatic $C_1$-$C_8$ diol is 1,4-butanediol having the structure

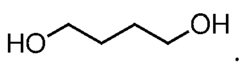

In particularly preferred embodiments, the molar ratio of compounds (i) and (ii) in step a) is between 2000:1 and 1:2000. More preferably, said ratio is 90:10, 75:25, 50:50, 25:75, 10:90, 5:95, 1:100, 1:200, 1:500, 1:1000, 1:2000 or any range between the listed ratios. Most preferably, said range is between 50:50 and 1:2000, between 50:50 and 1:200, between 10:90 and 1:100, 1:200 or 1:2000.

In one embodiment, in step b) of the process a mixture comprising a bifuran of Formula (I), a diester compound of

Formula (II), a diol selected from the group consisting of ethylene glycol, 1,3-propanediol, 1,4-butanediol, 1,4-cyclohexanedimethanol, or mixtures thereof, and a metal catalyst is contacted at a temperature in the range of from 140°C to 220°C to form a prepolymer.

In the methods disclosed herein, the step b) is preferably performed at a temperature in the range of from 140°C to 220°C, for example in the range of from 150 °C to 215 °C or from 170°C to 215°C or from 180°C to 210°C or from 190°C to 210°C. The time is typically from one hour to several hours, for example 2, 3, 4, or 5 hours or any time in between 1 hour and 5 hours.

In the preferred methods disclosed herein, polycondensation in step c) is performed by heating the prepolymer obtained in step b) under reduced pressure to a temperature in the range of from 210°C to 260°C to form the bifuran copolyester. A different catalyst, or more of the same catalyst as used in step b), can be added in step c). The temperature in step c) is typically in the range of from 220°C to 260°C, for example from 225°C to 255°C or from 230°C to 250°C. The pressure can be from less than about one atmosphere to 0.0001 atmospheres. In this step, the prepolymer undergoes polycondensation reactions, increasing the molecular weight of the polymer, and the diol is distilled off. The polycondensation step can be continued at a temperature in the range of from 210°C to 260°C for such a time as the intrinsic viscosity of the polymer reaches at least about 0.60 dL/g. The time is typically from 1 hour to several hours, for example 2, 3, 4, 5, 6, 7, 8, 9 or 10 hours or any time in between 1 hour and 10 hours. In one embodiment, the polymer obtained from step c) has an intrinsic viscosity of at least 0.60 dL/g. Once the desired intrinsic viscosity of the polymer is reached, the reactor and its contents can be cooled, for example to room temperature, to obtain the bifuran copolyester.

The present invention is also directed to use of a 2,2'-bifuran-5,5'-dicarboxylic monomer in preparing copolyesters having ultraviolet light (UV) blocking properties. Preferably, said 2,2'-bifuran-5,5'-dicarboxylic monomer is a diester of the 2,2'-bifuran-5,5'-dicarboxylic monomer, such as dimethyl 2,2'-bifuran-5,5'-dicarboxylate. Preferably, the prepared copolyester contains 0.5-6% of 2,2'-bifuran-5,5'-dicarboxylic monomer residues.

EXPERIMENTAL SECTION

## Materials and methods

Commercial grade solvents and reagents were used as received unless otherwise noted.

*Dimethyl 2,5-furandicarboxylate, FDCA* (**1**): 2,5-Furandicarboxylic acid (4.00 g) was mixed with dry methanol (120 mL), and 98% sulfuric acid (2 equiv) was added into the mixture. After refluxing overnight, the cooled mixture was evaporated to about 1/2 volume. After dilution with deionized water, the precipitated diester was filtered onto paper. After drying in air, the raw product was dissolved in ethyl acetate and filtered through silica gel. After evaporation, dimethyl 2,5-furandicarboxylate was afforded (4.25 g, 93%). $^1$H NMR (400 MHz, $CDCl_3$, ppm): $\delta$ 7.23 (s, 2H), 3.94 (s, 6H).

*Dimethyl 2,2'-bifuran-5,5'-dicarboxylate, BFDCA* (**2**): The synthesis method reported previously was followed to afford dimethyl 2,2'-bifuran-5,5'-dicarboxylate (4.53 g, 91%) as small white needles (Kainulainen et al., 2018). $^1$H NMR (400 MHz, $CDCl_3$, ppm): $\delta$ 7.26 (d, 2H, $J$ = 3.7 Hz), 6.90 (d, 2H, $J$ = 3.7 Hz), 3.93 (s, 6H).

*Polyester synthesis:* The polyesters were synthesized by weighing the diester(s) **1** and **2** in an appropriate ratio into a round-bottom flask equipped with a magnetic stirring bar. Dry 1,4-butanediol was added, together with tetrabutyl titanate (0.1 mol% relative to the total diester amount). The flask was heated to 180 °C under argon to initiate the reaction. After 3 h reaction, the pressure was gradually lowered to 2 mbar (200 Pa) over the period of 1 h. After increasing the temperature to 250 °C, the reaction was allowed to continue for 1 h. The cooled, solid polyester was allowed to dissolve in a mixture of $CF_3COOH$ and $CHCl_3$. The polyester was precipitated into methanol, affording a fibrous solid. The polyester was dried under vacuum at 60 °C. For NMR measurements, a polyester sample was dissolved in $CF_3COOD$.

*Dilute solution viscometry:* Intrinsic viscosities were evaluated using flow-times measured with a micro-Ubbelohde viscometer 30.0 °C. Polyester samples were dissolved in $CF_3COOH$, and the solution filtered to prepare 0.5 g/dL solutions for measurements.

*Differential scanning calorimetry (DSC):* Differential scanning calorimeter (Mettler Toledo DSC 821e) with heating and cooling rates of 10 °C/min and nitrogen gas flow of 60 $cm^3$/min was used. 5 mg samples placed in sealed 40 $\mu$L Al pans were used for the measurements.

*Thermogravimetric* analysis: Thermogravimetric analyzer (Mettler-Toledo TGA851e) with nitrogen flow of 95 $cm^3$/min was run from 30 to 700 °C at a heating rate of 10 °C/min.

*Melt pressing:* Dry polyester was melted at the appropriate temperature inside a closed heat-press, and the melt was then pressed into a film between two polyimide-coated aluminium plates. After cooling, a transparent film was obtained.

*Tensile testing:* Rectangular tensile test specimens were cut from the films, and the specimens were allowed to stand for 1-2 weeks prior to the tensile tests conducted at 23 °C. Tensile tester (Instron 5544, USA) with a gage length of 30 mm and crosshead speed of 5 mm/min was used to characterize the tensile modulus, tensile strength and elongation at break.

*UV-Vis:* Spectrophotometer (Shimadzu UV-1800) was used to characterize the absorption and transmittance of the melt-pressed films.

**Results and Discussion**

Dimethyl esters of FDCA (**1**), BFDCA (**2**) and 1,4-butanediol were polymerized in accordance with Table 1.

**Table 1.** Synthesis of copolyesters

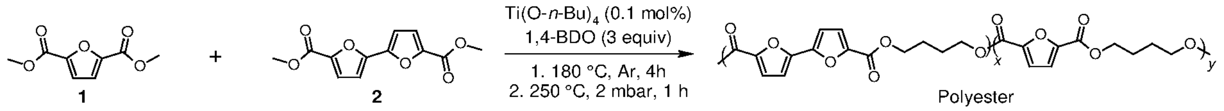


1 2 Polyester

| Polyester | Unit ratio, **1:2** (mol%) | | Yield (%) | IV[b] (dL/g) | Number-average sequence lengths[c] | | $R_i$[c] |
|---|---|---|---|---|---|---|---|
| | Feed | Product[a] | | | $L_{FF}$ | $L_{BB}$ | |
| PBF | 100:0 | 100:0 | 93 | 0.77 | - | 0 | 0 |
| $PBF_{90}Bf_{10}$ | 90:10 | 90:10 | 93 | 0.95 | 8.84 | 1.16 | 0.98 |
| $PBF_{75}Bf_{25}$ | 75:25 | 76:24 | 95 | 0.90 | 3.65 | 1.38 | 1.00 |
| $PBF_{50}Bf_{50}$ | 50:50 | 51:49 | 98 | 0.87 | 2.08 | 1.89 | 1.01 |
| $PBF_{25}Bf_{75}$ | 25:75 | 26:74 | 90 | 0.67 | 1.27 | 4.13 | 1.03 |
| $PBF_{10}Bf_{90}$ | 10:90 | 10:90 | 91 | 0.70 | 1.12 | 6.94 | 1.04 |
| PBBf | 0:100 | 0:100 | 97 | 0.72 | 0 | - | 0 |

[a]Calculated from $^1H$ NMR integrals in $CF_3COOD$. [b]Intrinsic viscosity according to the Billmeyer relation[i]. [c]Via $^{13}C$ NMR using Equations 1 and 2, randomness index $R_i$ calculated from Equation 3. [i]Billmeyer, F. Methods for estimating intrinsic viscosity. J. Polym. Sci., 1949, 4, 83-86.

Using the appropriate feed ratio of **1** and **2,** the desired polyesters were prepared in the presence of catalytic tetrabutyl titanate (TBT). The purity and structure of the polyesters were confirmed with $^1H$ NMR analysis (Figure 1). Diester feed ratios were practically identical to the ratios observed in the actual products. This suggests that both **1** and **2** are suitably stable and reactive monomers in polycondensation reactions.

$^1H$ and $^{13}C$ NMR analysis also confirms the random distribution of furan and bifuran units in the polyester chains. Specifically, assignment of the chain structure was obtained (Figure 1b, Table 1) from Equations 1 and 2 by using areas under the corresponding peaks ($A_{FF}$, $A_{BB}$, $A_{FB}$, and $A_{BF}$) in the $^{13}C$ NMR spectrum. Calculating the randomness indices ($R_i$, Equation 3) using the values from Equations 1 and 2, a highly random distribution of both furan-based moieties can be discerned.

$$L_{FF} = \frac{A_{FF} + {}^{1}/_{2}(A_{FB} + A_{BF})}{{}^{1}/_{2}(A_{FB} + A_{BF})} \quad (1)$$

$$L_{BB} = \frac{A_{BB} + {}^{1}/_{2}(A_{FB} + A_{BF})}{{}^{1}/_{2}(A_{FB} + A_{BF})} \quad (2)$$

$$R_i = \frac{1}{L_{FF}} + \frac{1}{L_{BB}} \quad (3)$$

The thermal properties were characterized using DSC. Slow 10 °C/min scanning rate reveals that PBF and PBBf are typical semi-crystalline materials, having clear cold-crystallization and melting peaks (Figures 2a-c). The thermal properties of both PBF and PBBf correspond to previously reported values, though $T_g$ was not previously reported for PBBf (Miyagawa et al., 2018). At even slower scanning rate (5 °C/min), the semi-crystalline nature of $PBF_{90}Bf_{10}$ and $PBF_{90}Bf_{10}$ becomes evident (Figure 2e). The data point to the fact that higher comonomer incorporation hinders crystallization. When the comonomer content approaches equimolar ratio, e.g. in $PBF_{75}Bf_{25}$, $PBF_{50}Bf_{50}$, and $PBF_{25}Bf_{75}$, highly amorphous copolyesters are obtained. The impact on crystallinity is lessened if the content of defects resulting from the incorporation of the minor comonomer is kept relatively small, e.g. below 10 mol%. However, high bifuran content increases the stiffness of the polyester chains, resulting in higher $T_g$.

**Table 3.** Thermal properties of the copolyesters

| Sample | $T_g$ (°C) | $T_m$ (°C) | | $T_{cc}$ (°C) | $T_{d5}$ (°C) | $T_d$ (°C) |
|---|---|---|---|---|---|---|
| | | 1st heating | 2nd heating | | | |
| PBF | 39 | 173 | 172 | 109 | 366 | 391 |
| $PBF_{90}Bf_{10}$ | 43 | 81, 157 | 156 (158*) | nd (119*) | 365 | 391 |
| $PBF_{75}Bf_{25}$ | 49 | 82, 130 | nd | nd | 364 | 392 |
| $PBF_{50}Bf_{50}$ | 53 | 97, 145 | nd | nd | 365 | 393 |
| $PBF_{25}Bf_{75}$ | 58 | 89, 188 | nd | nd | 367 | 398 |
| $PBF_{10}Bf_{90}$ | 60 | 202 | 202 (184*, 202*) | 144 (134*) | 364 | 397 |
| PBBf | 62 | 217 | 215 | 122 | 370 | 402 |

$T_g$: Glass transition temperature (2nd heating) at 10 °C/min. $T_m$: Melting point from heating at 10 °C/min (*:5 °C/min) $T_{cc}$: Peak of cold-crystallization (2nd heating) at 10 °C/min (*:5 °C/min). $T_{d5}$: Temperature at 5 % sample mass-loss. $T_d$: Temperature at peak mass-loss rate. nd: not detected.

Thermogravimetric analysis shows that the thermal stabilities (Table 4 and Figure 3) are comparable to existing polyester-type materials, i.e. each composition underwent a single decomposition step at 391-402 °C. These values are highly comparable to PET and PBT, and especially PEF. However, the more highly aromatic bifuran structure leads to an increase in the char yield. In conclusion, it should be recognized that the gap between decomposition and processing temperatures is wide for these materials.

All copolyesters had excellent mechanical properties, most notably exceeding the performance of PBF, with tensile strengths of ≥65 MPa. The tensile moduli were practically unchanged across the series.

**Table 4.** Mechanical properties of the copolyesters

| Sample[a] | $E_t$ (GPa) | $\sigma_m$ (MPa) | $\varepsilon_b$ (%) |
|---|---|---|---|
| PBF | 2.00±0.09 | 58.9±2.2 | 4.00±0.25 |
| $PBF_{90}Bf_{10}$ | 2.08±0.02 | 65.1±2.5 | 4.17±0.22 |
| $PBF_{75}Bf_{25}$ | 1.99±0.08 | 66.6±3.1 | 4.97±0.24 |
| $PBF_{50}Bf_{50}$ | 2.15±0.10 | 66.0±1.3 | 4.26±0.37 |
| $PBF_{25}Bf_{75}$ | 1.97±0.12 | 65.8±4.2 | 4.99±0.22 |
| $PBF_{10}Bf_{90}$ | 2.07±0.04 | 65.5±2.7 | 5.01±0.37 |
| PBBf | 2.03±0.06 | 66.0±3.0 | 5.39±0.21 |

[a]Five amorphous specimens were evaluated for each composition. $E_t$ = Tensile modulus. $\sigma_m$ = maximum tensile stress. $\varepsilon_b$ = elongation at break.

The most notable effect provided by the bifuran moieties is their inherent UV absorbance. The copolyesters functioned as effective UV light filters up to 400 nm wavelengths (Figure 4), irrespective of the bifuran content at the prepared thickness (0.10-0.15 mm). It is particularly notable that PBF does not provide similar UV light absorption at 300-400 nm. Thus, the copolyester films are promising transparent bio-based materials with low UV transmittance, as the visible light transmittance was excellent (e.g. 80% at 450 nm). While it is known (Kainulainen et al., 2018, and Miyagawa et al., 2018), that monomer 2 has its absorption maximum at longer wavelength (325 nm) than monomer 1 (265 nm) in solution, the bifuran moieties can provide surprisingly significant UV absorbance up to almost 400 nm. In contrast, PBF decreases in absorbance rapidly at wavelengths longer than 300 nm.

## Conclusions

PBF and PBBf are bio-based semi-crystalline polyesters, while their random copolyesters become more amorphous when more of the minor comonomer is incorporated. The copolyesters were characterized by good mechanical strengths and glass-transition temperatures of 42-60 °C. Incorporating more of the minor comonomer, a degree of control over the crystallization can be achieved. Most notably, incorporating a low level of the minor comonomer allows tailored properties. In particular, surprisingly low bifuran content provides a copolyester with very low UV transmittance, lower melting point and higher glass-transition temperature, depending on the exact monomer ratio. Very high bifuran content allows the preparation of materials with higher glass-transition temperature.

REFERENCES

Billmeyer, F. Methods for estimating intrinsic viscosity. J. Polym. Sci., 1949, 4, 83-86.

Kainulainen, T. P., Sirviö, J. A., Sethi, J., Hukka, T. I., Heiskanen, J. P. UV-Blocking Synthetic Biopolymer from Biomass-Based Bifuran Diester and Ethylene Glycol., Macromolecules, 2018, 51, 1822-1829.

Miyagawa, N., Suzuki, T., Okano, K., Matsumoto, T., Nishino, T., Mori, A., Synthesis of Furan Dimer-Based Polyamides with a High Melting Point, J. Polym. Sci., Part A: Polym. Chem., 2018, 56, 1516-1519.


## Claims

**1.** A copolyester comprising repeating units of (i) a 2,2'-bifuran-5,5'-dicarboxylic monomer residue, (ii) a diol monomer residue, and (iii) an aliphatic or cycloaliphatic $C_3$-$C_8$ dicarboxylic monomer residue or an aromatic $C_6$-$C_8$ dicarboxylic monomer residue, wherein said 2,2'-bifuran-5,5'-dicarboxylic monomer residue is derived from the compound of Formula

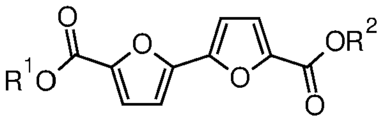

(I),

wherein $R^1$ and $R^2$ are each independently selected from the group consisting of: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, and

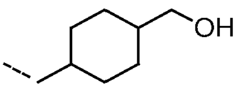

,

wherein said aliphatic or cycloaliphatic $C_3$-$C_8$ dicarboxylic monomer residue or said aromatic $C_6$-$C_8$ dicarboxylic monomer residue is derived from the compound of Formula

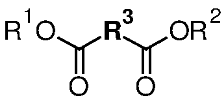

(II),

wherein $R^1$ and $R^2$ are independently as defined above for Formula (I) and $R^3$ is selected from the group consisting of

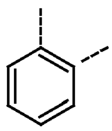

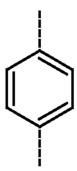

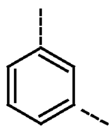

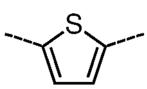

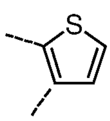

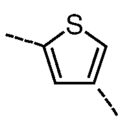

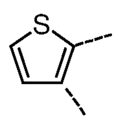

.

2. The copolyester according to claim 1, wherein said diol monomer residue is derived from an aliphatic, cycloaliphatic or aromatic $C_1$-$C_8$ diol, preferably selected from the group consisting of: ethylene glycol, 1,3-propanediol, 1,4-butanediol, and 1,4-cyclohexanedimethanol.

3. The copolyester according to claim 1 or 2, wherein a mixture of the 2,2'-bifuran-5,5'-dicarboxylic residues and the aliphatic or cycloaliphatic $C_3$-$C_8$ dicarboxylic residues or the aromatic $C_6$-$C_8$ dicarboxylic residues in said copolyester is such as to have a molar ratio of the 2,2'-bifuran-5,5'-dicarboxylic residues to the aliphatic or cycloaliphatic $C_3$-$C_8$ dicarboxylic residues or the aromatic $C_6$-$C_8$ dicarboxylic residues in a range of from 2000:1 to 1:2000.

4. The copolyester according to any one of claims 1-3, wherein the copolyester comprises the structure of Formula

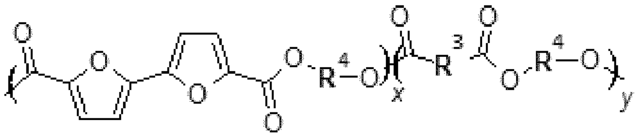
(III),

wherein $R^3$ is selected from the group consisting of

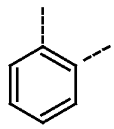
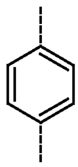
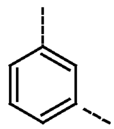

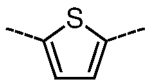
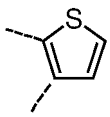
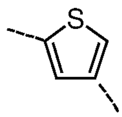
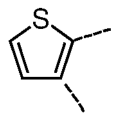
,

and wherein each $R^4$ is independently selected from the group consisting of $-CH_2-$, - $(CH_2)_2-$, $-(CH_2)_3-$, $-(CH_2)_4-$, $-(CH_2)_5-$, $-(CH_2)_6-$, $-(CH_2)_7-$, $-(CH_2)_8-$ and

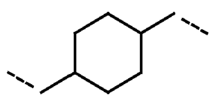
,

wherein the two structures in parenthesis represent randomly repeating units of the copolyester, and wherein x is independently an integer of 1 or more and y is independently an integer of 1 or more.

5. The bifuran copolyester according to claim 4, wherein $R^3$ is selected from the group consisting of:

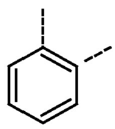
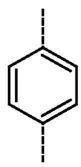
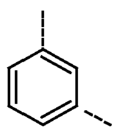
,

preferably $R^3$ is

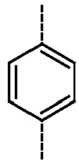.

6. The bifuran copolyester according to claim 4, wherein $R^3$ is selected from the group consisting of:

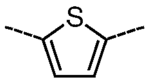 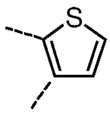 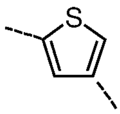 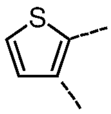.

7. The bifuran copolyester according to any one of claims 4-6, wherein each $R^4$ is - $(CH_2)_4$-.

8. The bifuran copolyester according to any one of claims 4-7, wherein the ratio of x:y is between 2000:1 and 1:2000, preferably between 50:50 and 1:2000 and more preferably said ratio is 90:10, 75:25, 50:50, 25:75 or 10:90.

9. A method of preparing a bifuran copolyester, the method comprising the steps of:

a) combining at least (i) a bifuran of Formula

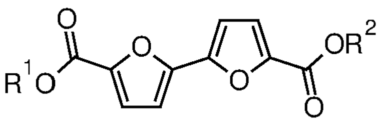 (I),

wherein $R^1$ and $R^2$ are each independently selected from the group consisting of: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, and

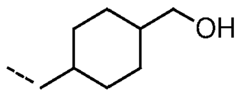;

(ii) a diester of an aliphatic or cycloaliphatic $C_3$-$C_8$ dicarboxylic monomer residue or of an aromatic $C_6$-$C_8$ dicarboxylic monomer residue, preferably a diester compound of Formula

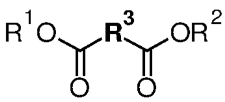 (II),

wherein $R^1$ and $R^2$ are each as defined above for Formula (I) and $R^3$ is selected from the group consisting of $-CH_2-$, $-(CH_2)_2-$, $-(CH_2)_3-$, $-(CH_2)_4-$, $-(CH_2)_5-$, $-(CH_2)_6-$, and the following cyclic ring structures

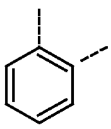 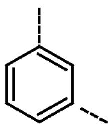 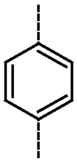 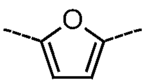 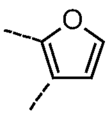 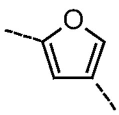 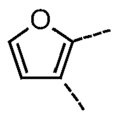 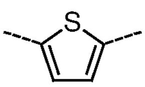 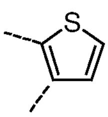 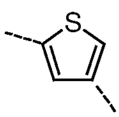 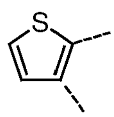;

(iii) an aliphatic, cycloaliphatic or aromatic $C_1$-$C_8$ diol and (iv) a metal catalyst to form a reaction mixture;
b) subjecting the mixture combined in step a) to a temperature in the range of from about 140°C to about 220°C under an inert atmosphere;
c) performing polycondensation to the mixture obtained in step b) by heating under reduced pressure to a temperature in the range of from about 210°C to about 260°C.

**10.** The method according to claim 9, wherein said diol is 1,3-propanediol, 1,4-butanediol or 1,2-ethanediol.

**11.** The method according to claim 9 or 10, wherein the metal catalyst comprises at least a titanium, bismuth, zirconium, tin, antimony, germanium, aluminium, cobalt, magnesium, or manganese compound.

**12.** The method according to any of claims 9-11, wherein said bifuran is dimethyl 2,2'-bifuran-5,5'-dicarboxylate having the structure

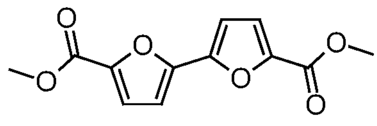, wherein said diester compound is dimethyl 2,5-furandicarboxylate having the structure

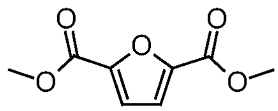,

and
wherein said aliphatic $C_1$-$C_8$ diol is 1,4-butanediol having the structure

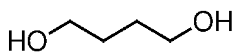

**13.** The method according to any one of claims 9-12, wherein said metal catalyst is tetrabutyl titanate.

**14.** The method according to any one of claims 9-13, wherein the molar ratio of compounds (i) and (ii) in step a) is between 2000:1 and 1:2000, preferably between 50:50 and 1:2000, and more preferably said ratio is 90:10, 75:25, 50:50, 25:75 or 10:90.

**15.** Use of a 2,2'-bifuran-5,5'-dicarboxylic monomer in preparing copolyesters having ultraviolet light (UV) blocking properties, wherein the prepared copolyester preferably contains 0.5-6 % of 2,2'-bifuran-5,5'- dicarboxylic monomer residues.

## Patentansprüche

**1.** Copolyester, der wiederkehrende Einheiten von (i) einem 2,2'-Bifuran-5,5'-dicarbonsäuremonomerrest, (ii) einem Diolmonomerrest und (iii) einem aliphatischen oder cycloaliphatischen $C_3$-$C_8$-Dicarbonsäuremonomerrest oder einem aromatischen $C_6$-$C_8$-Dicarbonsäuremonomerrest umfasst, wobei der 2,2'-Bifuran-5,5'-dicarbonsäuremonomerrest von der Verbindung der folgenden Formel abgeleitet ist

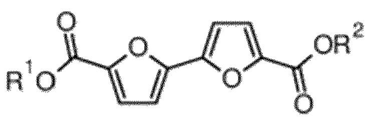 (I),

wobei $R^1$ und $R^2$ jeweils unabhängig aus der Gruppe ausgewählt sind, bestehend aus: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$,

$-(CH_2)_8OH$, und

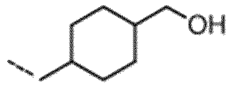
,

wobei der aliphatische oder cycloaliphatische $C_3$-$C_8$-Dicarbonsäuremonomerrest oder der aromatische $C_6$-$C_8$-Dicarbonsäuremonomerrest von der Verbindung der folgenden Formel abgeleitet ist

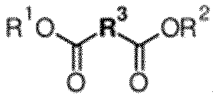
(II),

wobei $R^1$ und $R^2$ unabhängig voneinander wie vorstehend für Formel (I) definiert sind und $R^3$ aus der Gruppe ausgewählt ist, bestehend aus

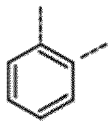
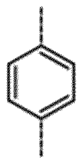
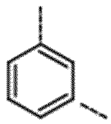

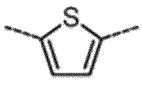
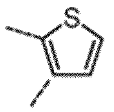
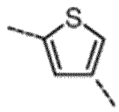
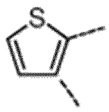
.

**2.** Copolyester nach Anspruch 1, wobei der Diolmonomerrest von einem aliphatischen, cycloaliphatischen oder aromatischen$_{C1}$-$_{C8}$-Diol abgeleitet ist, das vorzugsweise aus der Gruppe ausgewählt ist, bestehend aus: Ethylenglykol, 1,3-Propandiol, 1,4-Butandiol und 1,4-Cyclohexandimethanol.

**3.** Copolyester nach Anspruch 1 oder 2, wobei ein Gemisch der 2,2'-Bifuran-5,5'-dicarbonsäurereste und der aliphatischen oder cycloaliphatischen $C_3$-$C_8$-Dicarbonsäurereste oder der aromatischen $C_6$-$C_8$-Dicarbonsäurereste in dem Copolyester beschaffen ist, um ein Molverhältnis der 2,2'-Bifuran-5,5'-dicarbonsäurereste zu den aliphatischen oder cycloaliphatischen $C_3$-$C_8$-Dicarbonsäureresten oder den aromatischen $C_6$-$C_8$-Dicarbonsäureresten in einem Bereich von 2000:1 bis 1:2000 aufzuweisen.

**4.** Copolyester nach einem der Ansprüche 1-3, wobei der Copolyester die Struktur der folgenden Formel umfasst

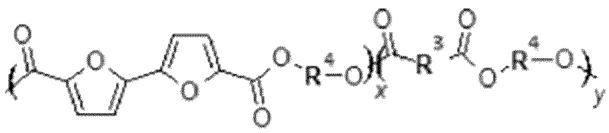
(III),

$R^3$ aus der Gruppe ausgewählt ist, bestehend aus

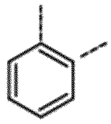
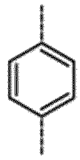
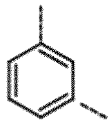

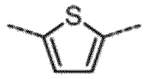 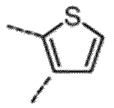 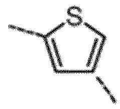 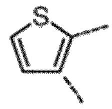 ,

und wobei jedes $R^4$ unabhängig aus der Gruppe ausgewählt ist, bestehend aus $-CH_2-$, - $(CH_2)_2-$, $-(CH_2)_3-$, $-(CH_2)_4-$, $-(CH_2)_5-$, $-(CH_2)_6-$, $-(CH_2)_7-$, $-(CH_2)_8-$ und

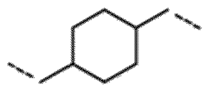 ,

wobei die beiden Strukturen in Klammern zufällig wiederkehrende Einheiten des Copolyesters darstellen, und wobei x unabhängig eine ganze Zahl von 1 oder mehr ist und y unabhängig eine ganze Zahl von 1 oder mehr ist.

**5.** Bifuran-Copolyester nach Anspruch 4, wobei $R^3$ aus der Gruppe ausgewählt ist, bestehend aus:

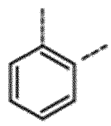
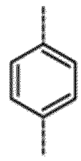
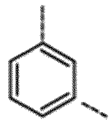 ,

wobei $R^3$ vorzugsweise

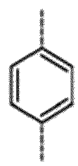

ist.

**6.** Bifuran-Copolyester nach Anspruch 4, wobei $R^3$ aus der Gruppe ausgewählt ist, bestehend aus:

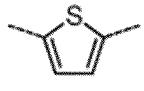 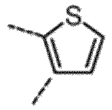 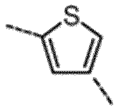 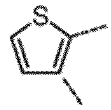 .

**7.** Bifuran-Copolyester nach einem der Ansprüche 4-6, wobei jedes $R^4$- $(CH_2)_4$- ist.

**8.** Bifuran-Copolyester nach einem der Ansprüche 4-7, wobei das Verhältnis von x:y zwischen 2000:1 und 1:2000, vorzugsweise zwischen 50:50 und 1:2000 beträgt und das Verhältnis bevorzugter 90:10, 75:25, 50:50, 25:75 oder

10:90 beträgt.

**9.** Verfahren zum Herstellen eines Bifuran-Copolyesters, wobei das Verfahren die Schritte umfasst zum:

a) Kombinieren von mindestens (i) einem Bifuran der Formel

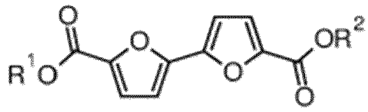

(I),

wobei $R^1$ und $R^2$ jeweils unabhängig aus der Gruppe ausgewählt sind, bestehend aus: -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, und

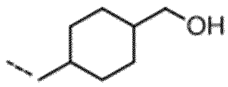

;

(ii) einem Diester eines aliphatischen oder cycloaliphatischen $C_3$-$C_8$-Dicarbonsäuremonomerrests oder eines aromatischen $C_6$-$C_8$-Dicarbonsäuremonomerrests, vorzugsweise einer Diesterverbindung der Formel

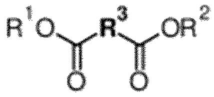

(II),

wobei $R^1$ und $R^2$ jeweils wie vorstehend für Formel (I) definiert sind und $R^3$ aus der Gruppe ausgewählt ist, bestehend aus $-CH_2-$, $-(CH_2)_2-$, $-(CH_2)_3-$, $-(CH_2)_4-$, $-(CH_2)_5-$, $-(CH_2)_6-$ und den folgenden zyklischen Ringstrukturen

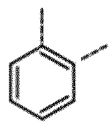
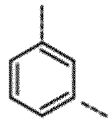
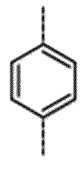
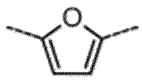
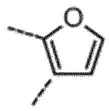
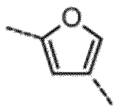
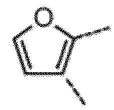
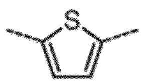
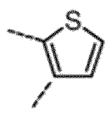
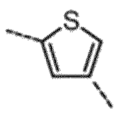
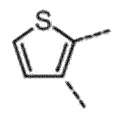

;

(iii) einem aliphatischen, cycloaliphatischen oder aromatischen $C_1$-$C_8$-Diol und (iv) einem Metallkatalysator, um ein Reaktionsgemisch zu bilden;

b) Aussetzen des in Schritt a) kombinierten Gemisches einer Temperatur im Bereich von etwa 140 °C bis etwa 220 °C unter einer inerten Atmosphäre;

c) Durchführen einer Polykondensation des in Schritt b) erhaltenen Gemisches durch Erhitzen unter reduziertem Druck auf eine Temperatur im Bereich von etwa 210 °C bis etwa 260 °C.

**10.** Verfahren nach Anspruch 9, wobei das Diol 1,3-Propandiol, 1,4-Butandiol oder 1,2-Ethandiol ist.

**11.** Verfahren nach Anspruch 9 oder 10, wobei der Metallkatalysator mindestens eine Titan-, Wismut-, Zirkonium-, Zinn-, Antimon-, Germanium-, Aluminium-, Kobalt-, Magnesium- oder Manganverbindung umfasst.

**12.** Verfahren nach einem der Ansprüche 9-11, wobei das Bifuran Dimethyl-2,2'-bifuran-5,5'-dicarboxylat ist, das die folgende Struktur aufweist

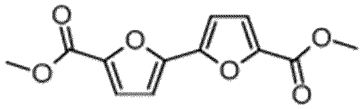
,

wobei die Diesterverbindung Dimethyl-2,5-furandicarboxylat ist, das die folgende Struktur aufweist

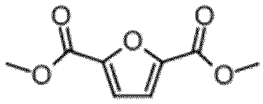
,

und
wobei das aliphatische $C_1$-$C_8$-Diol 1,4-Butandiol ist, das die folgende Struktur aufweist

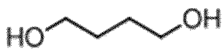

**13.** Verfahren nach einem der Ansprüche 9-12, wobei der Metallkatalysator Tetrabutyltitanat ist.

**14.** Verfahren nach einem der Ansprüche 9-13, wobei das Molverhältnis der Verbindungen (i) und (ii) in Schritt a) zwischen 2000:1 und 1:2000, vorzugsweise zwischen 50:50 und 1:2000 beträgt und das Verhältnis bevorzugter 90:10, 75:25, 50:50, 25:75 oder 10:90 beträgt.

**15.** Verwendung eines 2,2'-Bifuran-5,5'-dicarbonsäuremonomers beim Herstellen von Copolyestern, die blockierende Eigenschaften für ultraviolettes Licht (UV) aufweisen, wobei der hergestellte Copolyester vorzugsweise 0,5-6 % an 2,2'-Bifuran-5,5'-Dicarbonsäuremonomerresten enthält.

## Revendications

**1.** Copolyester comprenant des unités répétitives de (i) un résidu de monomère 2,2'-bifuran-5,5'-dicarboxylique, (ii) un résidu de monomère diol et (iii) un résidu de monomère dicarboxylique aliphatique ou cycloaliphatique en $C_3$-$C_8$ ou un résidu de monomère dicarboxylique aromatique en $C_6$-$C_8$, dans lequel ledit résidu de monomère 2,2'-bifuran-5,5'-dicarboxylique est dérivé du composé de formule

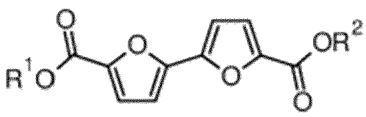
(I),

dans lequel $R^1$ et $R^2$ sont chacun indépendamment choisis dans le groupe constitué par : -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, et

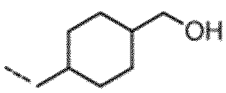
,

dans lequel ledit résidu de monomère dicarboxylique aliphatique ou cycloaliphatique en $C_3$-$C_8$ ou ledit résidu de monomère dicarboxylique aromatique en $C_6$-$C_8$ est dérivé du composé de formule

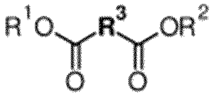
(II),

dans lequel $R^1$ et $R^2$ sont indépendamment tels que précédemment définis pour la formule (I) et $R^3$ est choisi dans le groupe constitué par

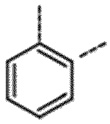
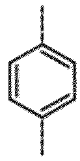
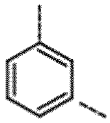

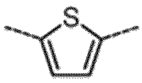
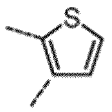
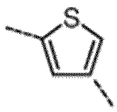
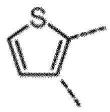
.

**2.** Copolyester selon la revendication 1, dans lequel ledit résidu de monomère diol est dérivé d'un diol aliphatique, cycloaliphatique ou aromatique en $C_1$-Cs, de préférence choisi dans le groupe constitué par : l'éthylène glycol, le 1,3-propanediol, le 1,4-butanediol et le 1,4-cyclohexanediméthanol.

**3.** Copolyester selon la revendication 1 ou 2, dans lequel un mélange des résidus 2,2'-bifuran-5,5'-dicarboxylique et des résidus dicarboxyliques aliphatiques ou cycloaliphatiques $C_3$-$C_8$ ou des résidus dicarboxyliques aromatiques en $C_6$-$C_8$ dans ledit copolyester est tel qu'il présente un rapport molaire des résidus 2,2'-bifuran-5,5'-dicarboxyliques aux résidus dicarboxyliques aliphatiques ou cycloaliphatiques en $C_3$-$C_8$ ou aux résidus dicarboxyliques aromatiques en $C_6$-$C_8$ dans une plage de 2000:1 à 1:2000.

**4.** Copolyester selon l'une quelconque des revendications 1-3, dans lequel le copolyester comprend la structure de formule

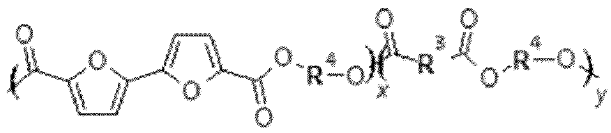
(III),

dans lequel $R^3$ est choisi dans le groupe constitué par

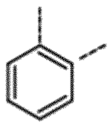
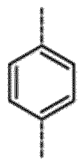
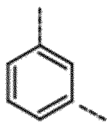

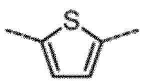
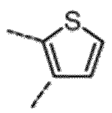
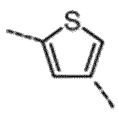
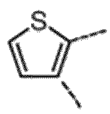
,

et dans lequel chaque $R^4$ est sélectionné indépendamment dans le groupe constitué par $-CH_2-$, - $(CH_2)_2-$, $-(CH_2)_3-$, $-(CH_2)_4-$, $-(CH_2)_5-$, $-(CH_2)_6-$, $-(CH_2)_7-$, $-(CH_2)_8-$ et

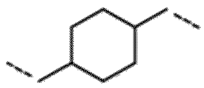

dans lequel les deux structures entre parenthèses représentent des unités se répétant de manière aléatoire du copolyester et dans lequel x est indépendamment un entier de 1 ou plus et y est indépendamment un entier de 1 ou plus.

**5.** Copolyester de bifurane selon la revendication 4, dans lequel $R^3$ est choisi dans le groupe constitué par :

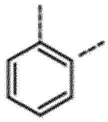
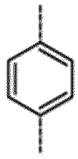
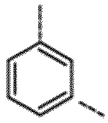

,

de préférence $R^3$ est

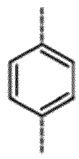

.

**6.** Copolyester de bifurane selon la revendication 4, dans lequel $R^3$ est choisi dans le groupe constitué par :

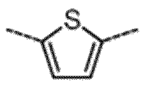
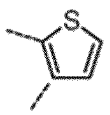
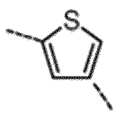
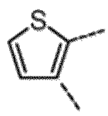

.

**7.** Copolyester de bifurane selon l'une quelconque des revendications 4-6, dans lequel chaque $R^4$ est - $(CH_2)_4$-.

**8.** Copolyester de bifurane selon l'une quelconque des revendications 4-7, dans lequel le rapport de x:y est entre 2000:1 et 1:2000, de préférence entre 50:50 et 1:2000, et plus préférentiellement, ledit rapport est 90:10, 75:25, 50:50, 25:75 ou 10:90.

**9.** Procédé de préparation d'un copolyester de bifurane, le procédé comprenant les étapes consistant à :

a) combiner au moins (i) un bifurane de formule

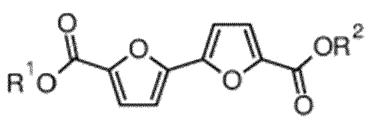

(I),

dans lequel $R^1$ et $R^2$ sont chacun indépendamment choisis dans le groupe constitué par : -H, $-CH_3$, $-CH_2CH_3$, $-(CH_2)_2CH_3$, $-CH(CH_3)_2$, $-(CH_2)_3CH_3$, $-(CH_2)_2OH$, $-(CH_2)_3OH$, $-(CH_2)_4OH$, $-(CH_2)_5OH$, $-(CH_2)_6OH$, $-(CH_2)_7OH$, $-(CH_2)_8OH$, et

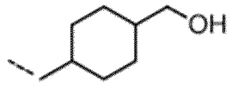

;

(ii) un diester d'un résidu de monomère dicarboxylique aliphatique ou cycloaliphatique en $C_3$-$C_8$ ou d'un résidu de monomère dicarboxylique aromatique en $C_6$-$C_8$, de préférence un composé de diester de formule

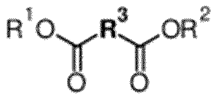 (II),

dans lequel $R^1$ et $R^2$ sont chacun tels que précédemment définis pour la formule (I) et $R^3$ est choisi dans le groupe constitué par $-CH_2-$, $-(CH_2)_2-$, $-(CH_2)_3-$, $-(CH_2)_4-$, $-(CH_2)_5-$, $-(CH_2)_6-$, et les structures de cycle cycliques suivantes

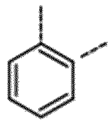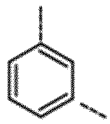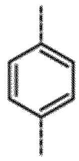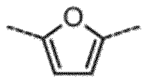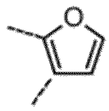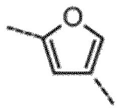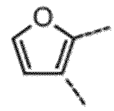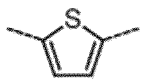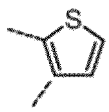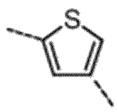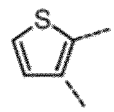 ;

(iii) un diol aliphatique, cycloaliphatique ou aromatique en $C_1$-$C_8$ et (iv) un catalyseur métallique pour former un mélange réactionnel ;

b) soumettre le mélange combiné à l'étape a) à une température dans la plage d'environ 140 °C à environ 220 °C sous une atmosphère inerte ;
c) effectuer une polycondensation du mélange obtenu à l'étape b) en chauffant sous pression réduite à une température dans la plage d'environ 210 °C à environ 260 °C.

**10.** Procédé selon la revendication 9, dans lequel ledit diol est le 1,3-propanediol, le 1,4-butanediol ou le 1,2-éthanediol.

**11.** Procédé selon la revendication 9 ou 10, dans lequel le catalyseur métallique comprend au moins un composé de titane, de bismuth, de zirconium, d'étain, d'antimoine, de germanium, d'aluminium, de cobalt, de magnésium ou de manganèse.

**12.** Procédé selon l'une quelconque des revendications 9-11, dans lequel ledit bifurane est le 2,2'-bifurane-5,5'-dicarboxylate de diméthyle présentant la structure

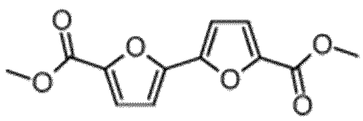 ,

dans lequel ledit composé de diester est le 2,5-furanedicarboxylate de diméthyle présentant la structure

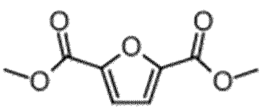 ,

et
dans lequel ledit diol aliphatique en $C_1$-$C_8$ est le 1,4-butanediol présentant la structure

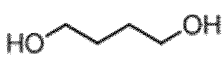

**13.** Procédé selon l'une quelconque des revendications 9-12, dans lequel ledit catalyseur métallique est le titanate de

tétrabutyle.

**14.** Procédé selon l'une quelconque des revendications 9-13, dans lequel le rapport molaire des composés (i) et (ii) à l'étape a) est entre 2000:1 et 1:2000, de préférence entre 50:50 et 1:2000, et plus préférentiellement ledit rapport est 90:10, 75:25, 50:50, 25:75 ou 10:90.

**15.** Utilisation d'un monomère 2,2'-bifuran-5,5'-dicarboxylique dans la préparation de copolyesters présentant des propriétés de blocage de lumière ultraviolette (UV), dans laquelle le copolyester préparé contient, de préférence, 0,5 à 6 % de résidus de monomère 2,2'-bifuran-5,5'-dicarboxylique.

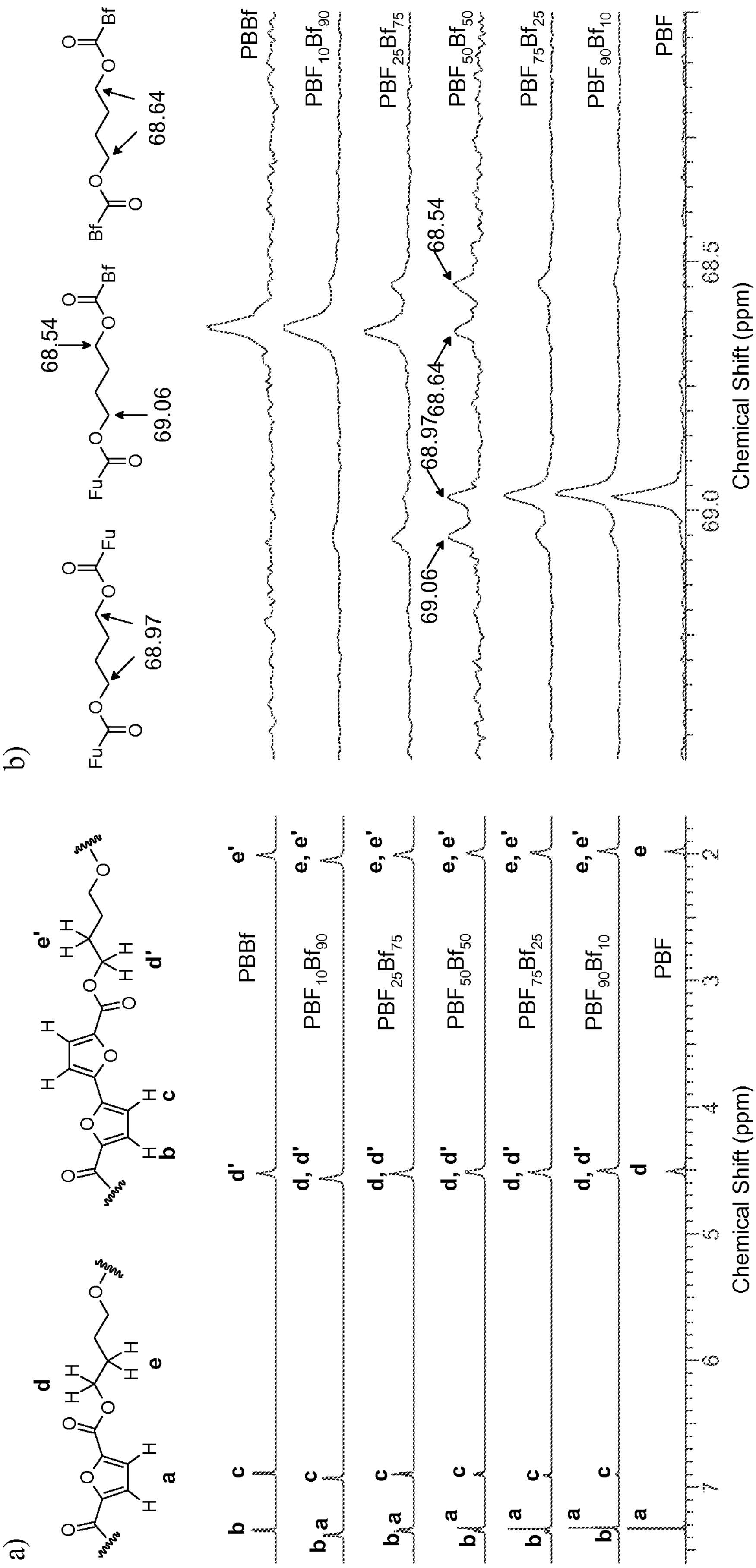


**Figures 1a and 1b.**

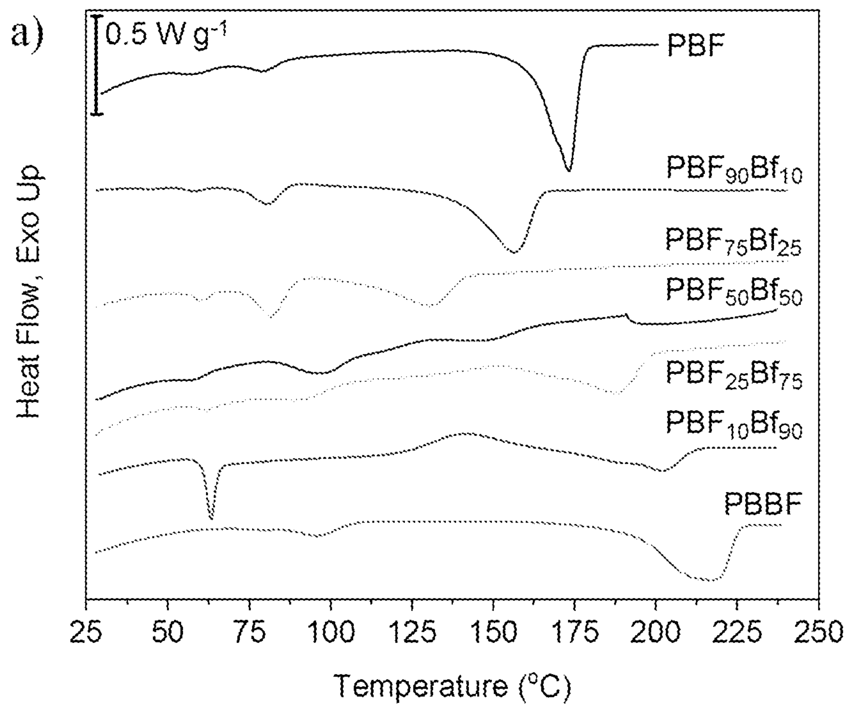


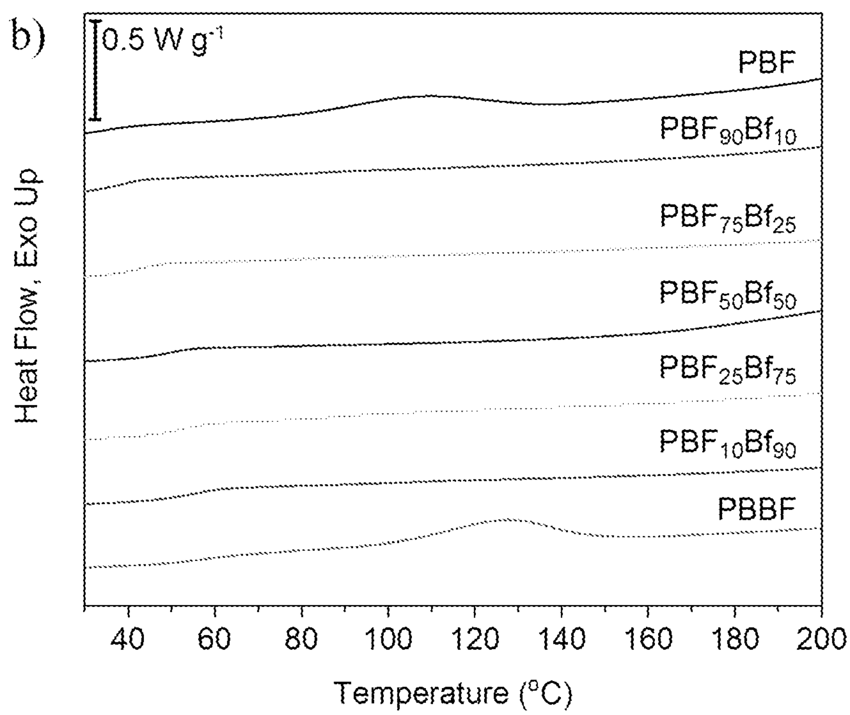


**Figures 2a-2b.**

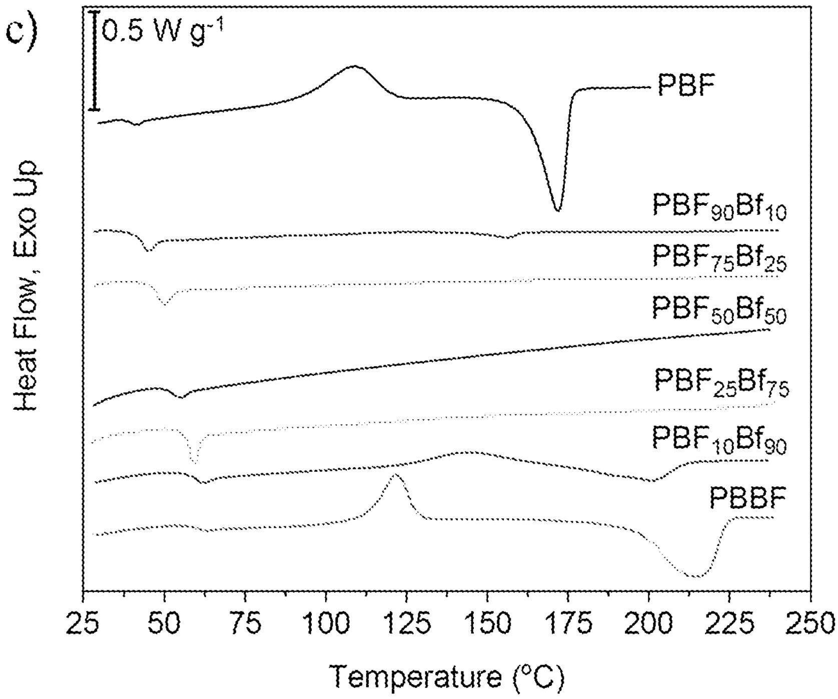


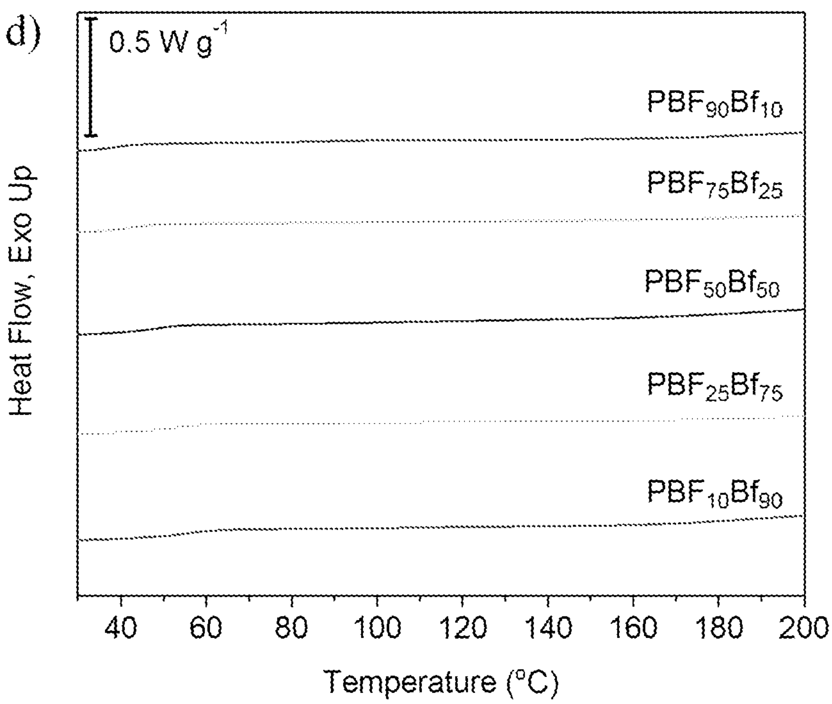


**Figures 2c-2d**.

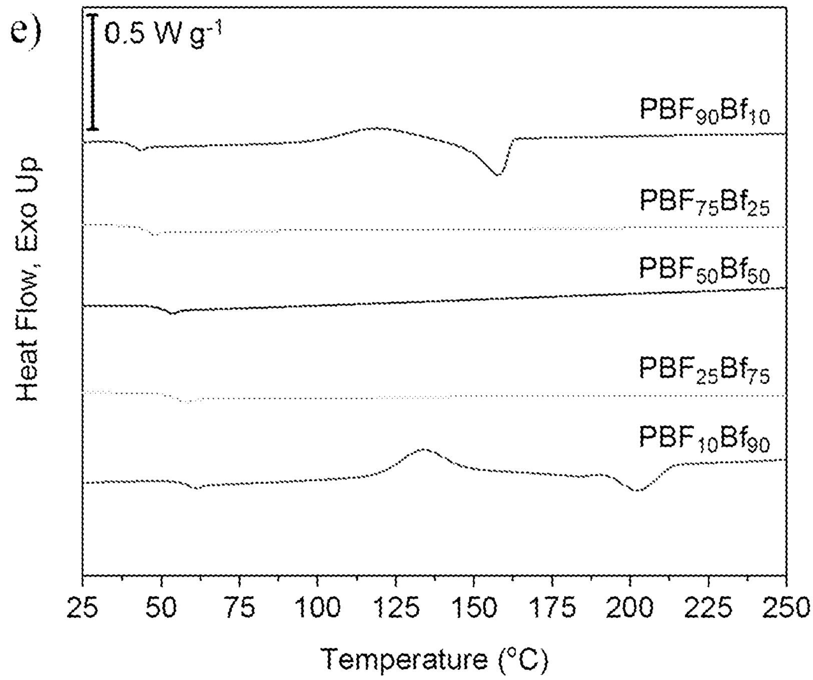
e)
0.5 W g-1
PBF90Bf10
PBF75Bf25
PBF50Bf50
PBF25Bf75
PBF10Bf90
Heat Flow, Exo Up
25
50
75
100
125
150
175
200
225
250
Temperature (°C)

**Figure 2e**.

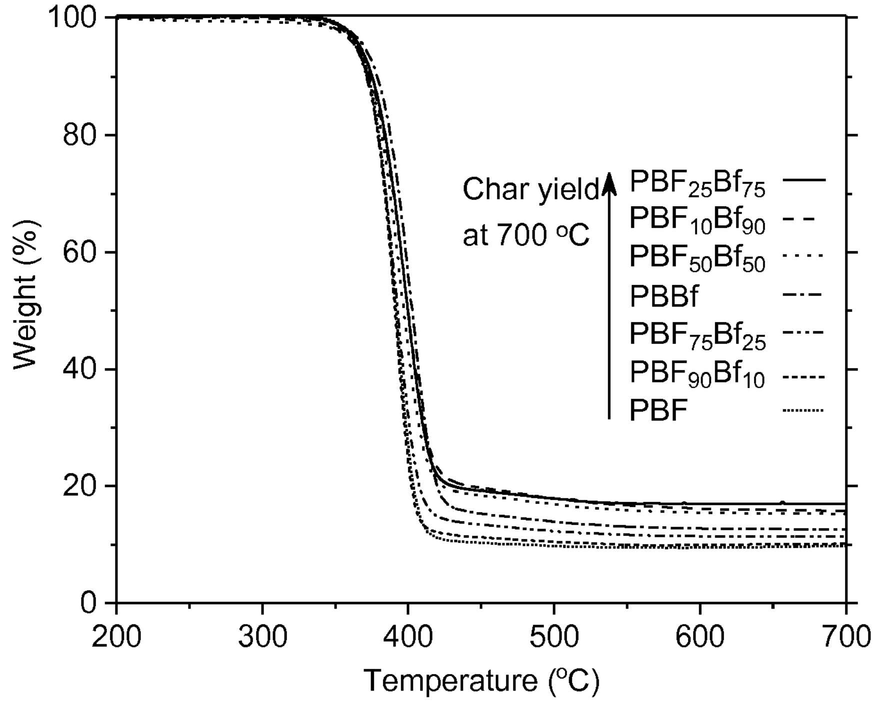


**Figure 3**.

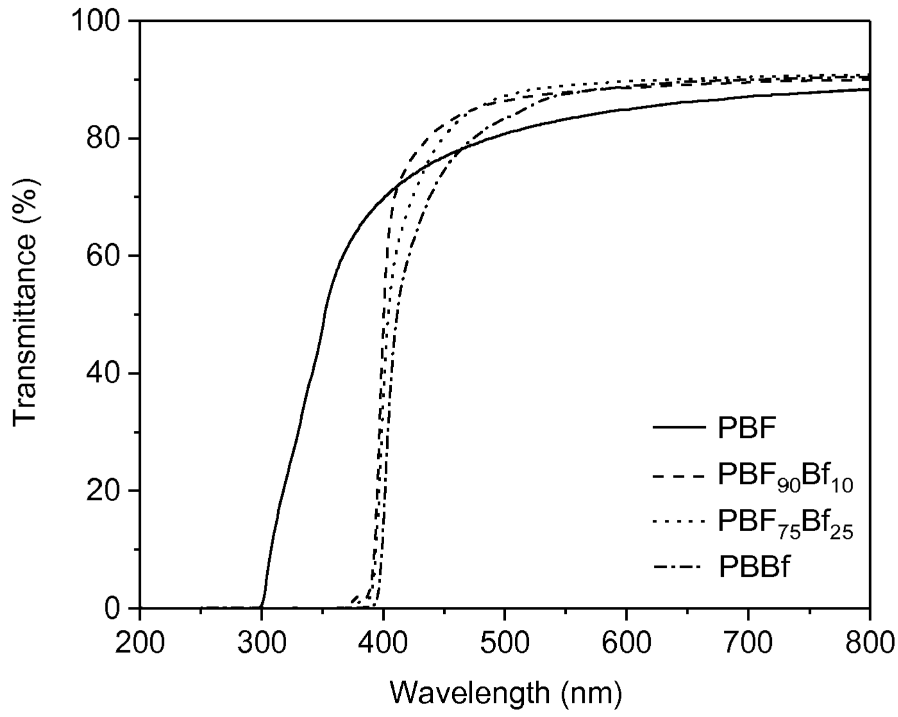


**Figure 4.**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019182693 A


### Non-patent literature cited in the description


- **MIYAGAWA et al.** *Chemistry Letters*, 05 October 2017, vol. 46 (10), 1535-1538
- **BILLMEYER, F**. Methods for estimating intrinsic viscosity.. *J. Polym. Sci.*, 1949, vol. 4, 83-86
- **BILLMEYER, F.** *J. Polym. Sci.*, 1949, vol. 4, 83-86
- **KAINULAINEN, T. P.** ; **SIRVIÖ, J. A.** ; **SETHI, J.** ; **HUKKA, T. I.** ; **HEISKANEN, J. P**. UV-Blocking Synthetic Biopolymer from Biomass-Based Bifuran Diester and Ethylene Glycol.. *Macromolecules*, 2018, vol. 51, 1822-1829
- **MIYAGAWA, N.** ; **SUZUKI, T.** ; **OKANO, K.** ; **MATSUMOTO, T.** ; **NISHINO, T** ; **MORI, A**. Synthesis of Furan Dimer-Based Polyamides with a High Melting Point. *J. Polym. Sci., Part A: Polym. Chem.*, 2018, vol. 56, 1516-1519